# EUROPÄISCHE PATENTANMELDUNG

(11) **EP 4 817 936 A1**
(43) Veröffentlichungstag der Anmeldung: **07.10.2026**
(21) Anmeldenummer: 26167704.1
(22) Anmeldetag: 25.03.2026
(51) Int. Cl.: B60L 50/64, B60L 50/60, B60L 58/19, B60L 58/21

(54) **ELEKTRISCHE MOBILE ARBEITSMASCHINE**

(30) Priorität: 31.03.2025 AT 502172025
(71) Anmelder: Wacker Neuson Linz GmbH, 4063 Hörsching (AT)
(72) Erfinder: Oberndorfer, Paul, 4650 Lambach (AT); Recheis, Manes, 4063 Hörsching (AT); Höftberger, Matthäus, 4760 Raab (AT)
(74) Vertreter: Hübscher & Partner Patentanwälte GmbH

(57) **Zusammenfassung**

Es wird eine elektrische mobile Arbeitsmaschine (1) mit einem Batteriesystem (3) zur elektrischen Versorgung der Arbeitsmaschine (1) mit elektrischer Energie beschrieben, wobei das Batteriesystem (3) wenigstens einen Energiespeicher (5), wenigstens einen Energiespeicheranschluss (6) und ein Batteriemanagementsystem (7) umfasst. Um eine kosteneffiziente Herstellung der Energieversorgung und eine einfache Wartung zu ermöglichen, wird vorgeschlagen, dass neben dem Batteriesystem (3) ein Zusatzbatteriesystem (4) mit wenigstens einem eigenen Energiespeicher (5), wenigstens einem eigenen Energiespeicheranschluss (6) und einem eigenen Batteriemanagementsystem (7) vorgesehen ist.

## Beschreibung

Die Erfindung bezieht sich auf eine elektrische mobile Arbeitsmaschine mit einem Batteriesystem zur elektrischen Versorgung der Arbeitsmaschine mit elektrischer Energie, wobei das Batteriesystem wenigstens einen Energiespeicher, wenigstens einen Energiespeicheranschluss und ein Batteriemanagementsystem umfasst.

Zur Versorgung von elektrischen mobilen Arbeitsmaschinen ist es aus dem Stand der Technik bekannt, Batteriesysteme einzusetzen, welche Energiespeicher aufweisen, die über mehrere Energiespeicheranschlüsse mit elektrischen Komponenten der Arbeitsmaschine und/oder einem Ladegerät verbindbar sind. Weiter weist das Batteriesystem ein Batteriemanagementsystem (BMS) auf, welches für die Überwachung und Regelung des Batteriesystems zuständig ist. Je nach Anforderungsprofil der zu versorgenden elektrischen Arbeitsmaschine wird die Kapazität bzw. Leistung und daher die Anzahl und Art der Energiespeicher an die Arbeitsmaschine angepasst, sodass unterschiedliche Arbeitsmaschinen jeweils spezifisch entwickelte Batteriesysteme erfordern, was zu erhöhten Entwicklungs- und Produktionskosten führt.

Um ein Batteriesystem an unterschiedliche Anforderungsprofile anzupassen, ist es weiter bekannt, ein Batteriesystem mit mehreren modular erweiterbaren Energiespeichern auszustatten, die über das gemeinsame BMS überwacht und geregelt werden. Das Vorsehen dieser modularen Energiespeicher ist jedoch aufgrund der zusätzlich notwendigen Komponenten, Kabel, Gehäuse ebenfalls mit erhöhten Produktionskosten verbunden. Darüber hinaus können defekte modulare Energiespeicher in einem großen Batteriesystem eine aufwendige Reparatur und Wartung bedingen.

Der Erfindung liegt somit die Aufgabe zugrunde, eine ausfallsichere elektrische mobile Arbeitsmaschine vorzuschlagen, deren elektrische Energieversorgung einerseits weitgehend unabhängig von den Leistungs- und Kapazitätsanforderungen der Arbeitsmaschine möglichst produktionskosteneffizient sichergestellt werden kann und deren elektrische Energieversorgung andererseits auf einfache Art und Weise gewartet bzw. repariert werden kann.

Die Erfindung löst die gestellte Aufgabe dadurch, dass neben dem Batteriesystem ein Zusatzbatteriesystem mit wenigstens einem eigenen Energiespeicher, wenigstens einem eigenen Energiespeicheranschluss und einem eigenen Batteriemanagementsystem vorgesehen ist. Zufolge der erfindungsgemäßen Merkmale ist die elektrische mobile Arbeitsmaschine mit wenigstens zwei eigenständig funktionstüchtigen Batteriesystemen ausgestattet, die gemeinsam oder unabhängig voneinander zur Versorgung der elektrischen mobilen Arbeitsmaschine eingesetzt werden können. Fällt ein Batteriesystem aus, so kann aufgrund der Ausbildung des Batteriesystems und des Zusatzbatteriesystems als redundante Batteriesysteme die Arbeit mit der Arbeitsmaschine fortgesetzt werden, während das defekte Batteriesystem mit all ihren Komponenten völlig ausgetauscht wird, sodass sich ein rascher und einfacher Reparaturprozess ergibt. Durch etwaiges Verschalten der zwei Batteriesysteme kann dabei die Kapazität und/oder Leistung der gesamten Energieversorgungseinheit erhöht werden, was eine Skalierbarkeit und somit eine Anpassung der Energieversorgungseinheit auf Arbeitsmaschinen unterschiedlicher Anforderungsprofilen ermöglicht. Auf diese Weise müssen keine auf die jeweiligen Arbeitsmaschinenanforderungen angepassten Spezialanfertigungen von Batteriesystemen entwickelt werden, sodass die spezifischen Entwicklungs- und Produktionskosten deutlich reduziert werden können. Dadurch, dass das Batteriesystem und das Zusatzbatteriesystem alle notwendigen Komponenten, wie Energiespeicher, Energiespeicheranschlüsse und ein Batteriemanagementsystem aufweisen, sind diese jeweils als autarke und insbesondere eigensichere Batteriesysteme ausgebildet. Hierzu können das Batteriesystem und das Zusatzbatteriesystem je Schaltschütze, Explosionsschutz, Sicherungselemente und/oder mechanische Sicherungen aufweisen.

Sowohl das Batteriesystem als auch das Zusatzbatteriesystem können mehrere miteinander verschaltete Energiespeicher und mehrere Energiespeicheranschlüsse aufweisen. Die Energiespeicheranschlüsse können beispielsweise zur Verbindung mit elektrischen Komponenten der Arbeitsmaschine, elektrohydraulischen Komponenten der Arbeitsmaschine und/oder mit einer Ladestation eigesetzt werden. Der Energiespeicher kann ein Batteriemodul sein. Vorzugsweise weist das Batteriesystem und/oder das Zusatzbatteriesystem mehrere miteinander verschaltete Batteriemodule auf. Die Batteriemodule können wiederum mehrere miteinander verschaltete Batterieeinzelzellen aufweisen.

Um die Anpassbarkeit an unterschiedliche Anforderungsprofile von Arbeitsmaschinen weiter zu verbessern, können mehrere Zusatzbatteriesysteme vorgesehen sein. Dadurch wird einerseits höhere Redundanz und somit Ausfallsicherheit geschaffen und andererseits können bei entsprechender Verschaltung der Batteriesysteme und Zusatzbatteriesysteme stark unterschiedliche Kapazitäts- und/oder Leistungsanforderungen erfüllt werden.

Damit im Rahmen der Wartung und Montage standardisierte Arbeitsabläufe etabliert werden können, wird vorgeschlagen, dass das Batteriesystem und das Zusatzbatteriesystem bezüglich deren äußeren Abmessungen ident ausgebildet sind. Dies bedeutet, dass diese gleiche Einbaumaße und vorzugsweise eine gleiche Positionierung der Energiespeicheranschlüsse aufweisen. Darüber hinaus können diese eine gleiche Positionierung von Signalverbindungsanschlüssen für das Batteriemanagementsystem aufweisen.

Eine deutliche Kostenreduktion bei der Produktion unabhängig von der Art und Größe der Arbeitsmaschine kann dadurch erreicht werden, dass das Batteriesystem und das Zusatzbatteriesystem bezüglich ihrer Komponenten ident ausgebildet sind. Dass Batteriesystem und das Zusatzbatteriesystem sind daher bezüglich ihrer Leistung und Kapazität gleich und definieren somit analog fertigbare Standardbatteriesysteme des gleichen Typs. Unterschiedlichste elektrische mobile Arbeitsmaschinen können somit mit diesen Standardbatteriesystemen (Batteriesystem und ein oder mehrere Zusatzbatteriesysteme) ausgestattet werden, wobei lediglich die Anzahl der eingesetzten Standardbatteriesysteme und gegebenenfalls die Verschaltung an das Anforderungsprofil der Arbeitsmaschine angepasst werden muss. Da nur ein Typ an Batteriesystemen gefertigt werden muss, können dadurch die Entwicklungs-, Produktions- und Einbaukosten erheblich reduziert werden.

Damit die Handhabung im Schadens- oder Nachrüstfall vereinfacht werden kann, kann das Batteriesystem und das Zusatzbatteriesystem je in einem Gehäuse einer eigenen Einbaueinheit angeordnet sein. Über die Einbaueinheit können die Batteriesysteme unabhängig voneinander im Maschinenraum der Arbeitsmaschine montiert und zum Austausch verlagert werden. Hierbei kann die Handhabung weiter vereinfacht und die Fertigungskosten weiter reduziert werden, wenn das Batteriesystem und das Zusatzbatteriesystem idente Einbaueinheiten ausbilden. In diesem Fall weisen das Batteriesystem und das Zusatzbatteriesystem nicht nur idente Komponenten auf, sondern weisen einen völlig identen Aufbau mit identer Anordnung der Komponenten auf, sodass nun nicht nur Batteriesysteme eines analogen Typs gefertigt werden müssen, sondern exakt baugleiche Einehitsbatteriesysteme, die jeweils für sich autarke Batteriesysteme darstellen.

Das Batteriesystem und das Zusatzbatteriesystem können miteinander verschaltbar sein, wodurch sich eine Energieversorgungseinheit mit wenigstens zwei Batteriemanagementsystemen ergibt. Um dabei eine geordnete Regelung und Überwachung durch das Batteriemanagementsystem zu ermöglichen, wird vorgeschlagen, dass das Batteriesystem und das Zusatzbatteriesystem je eine Zuordnungseinheit umfassen, über die dem Batteriesystem und dem Zusatzbatteriesystem eine Master- oder Slavefunktion zugeordnet wird. Das Batteriesystem respektive Zusatzbatteriesystem, dem die Masterfunktion zugeordnet wird, übernimmt demnach die Regelung der gesamten Energieversorgungseinheit.

Alternativ oder zusätzlich kann für die Koordination der unterschiedlichen Batteriesysteme und Zusatzbatteriesysteme und damit zur Steuerung der elektrischen Versorgung der elektrischen mobilen Arbeitsmaschine, insbesondere zum Wechseln zwischen einem Parallelversorgungsmodus und einem Seriellversorgungsmodus, eine mit dem Batteriesystem und dem Zusatzbatteriesystem signalverbundene und Funktionsdaten aus diesen auslesende Steuereinheit vorgesehen sein. Als Funktionsdaten können Ladezustände, die Spannung, die Kapazität, der nutzbare Energieinhalt und der Alterungszustand der Energiespeicher des jeweiligen Batteriesystems oder Zusatzbatteriesystems herangezogen werden. Ist gemäß einer mithilfe der Funktionsdaten durchgeführten Zulässigkeitsprüfung eine parallele Energieversorgung möglich, kann die Steuereinheit die Batteriesysteme und Zusatzbatteriesysteme parallelschalten. Sofern die Funktionsdaten keine parallele Energieversorgung zulassen, kann die Steuereinheit die Energieversorgung seriell schalten. In diesem Fall wird erst ein Batteriesystem genutzt, um die Arbeitsmaschine mit Energie zu versorgen, bevor dann das weitere beispielsweise Zusatzbatteriesystem genutzt wird. Insbesondere lässt die Zulässigkeitsprüfung eine Parallelschaltung dann nicht zu, wenn aus den Funktionsdaten eine einen Grenzwert überschreitende Spannungsabweichung zwischen den zu parallelschaltenden Batterie-/Zusatzbatteriesystemen abgeleitet wird. Der Grenzwert kann 10% der maximalen erlaubt Batteriespannung betragen, bevorzugt 8% der maximalen Batteriespannung und besonders bevorzugt 5% der maximalen Batteriespannung. Bei einem Batteriesystem mit max. 58.8 V erlaubter Batteriespannung darf die Spannungsabweichung der zu parallelschaltenden Batterie- /Zusatzbatteriesysteme also - im Falle des 10% Grenzwertes- maximal 5,88 Volt betragen. Sofern die Spannungsabweichung mehr als 5,88 Volt beträgt, werden die Batteriesysteme seriell genutzt. Beträgt die Spannungsabweichung weniger als 5,88 Volt können diese parallel betrieben werden.

Unabhängig von der elektrischen mobilen Arbeitsmaschine betrifft die Erfindung auch eine Energieversorgungseinheit für eine elektrische mobile Arbeitsmaschine mit einem Batteriesystem zur elektrischen Versorgung der Arbeitsmaschine mit elektrischer Energie, wobei das Batteriesystem wenigstens einen Energiespeicher, wenigstens einen Energiespeicheranschluss und ein Batteriemanagementsystem umfasst, wobei neben dem Batteriesystem ein Zusatzbatteriesystem mit wenigstens einem eigenen Energiespeicher, wenigstens einem eigenen Energiespeicheranschluss und einem eigenen Batteriemanagementsystem vorgesehen ist. Das Batteriesystem und Zusatzbatteriesystem sind je für sich autark funktionierende Batteriesysteme. Bevorzugt sind deren äußeren Abmessungen ident ausgebildet. Vorzugsweise weisen diese idente Komponenten auf. Weiter bevorzugt sind Batteriesystem und Zusatzbatteriesystem völlig ident ausgebildet. Insbesondere können das Batteriesystem und Zusatzbatteriesystem idente Einbaueinheiten ausbilden. In einer bevorzugten Ausführungsform sind das Batteriesystem und Zusatzbatteriesystem miteinander verschaltbar und/oder umfassen je eine Zuordnungseinheit, über die dem Batteriesystem und dem Zusatzsystem eine Master- oder Slavefunktion zugeordnet wird. Dem Batteriesystem und dem Zusatzbatteriesystem kann eine mit diesen signalverbundene und Funktionsdaten aus diesen auslesende Steuereinheit zugeordnet sein.

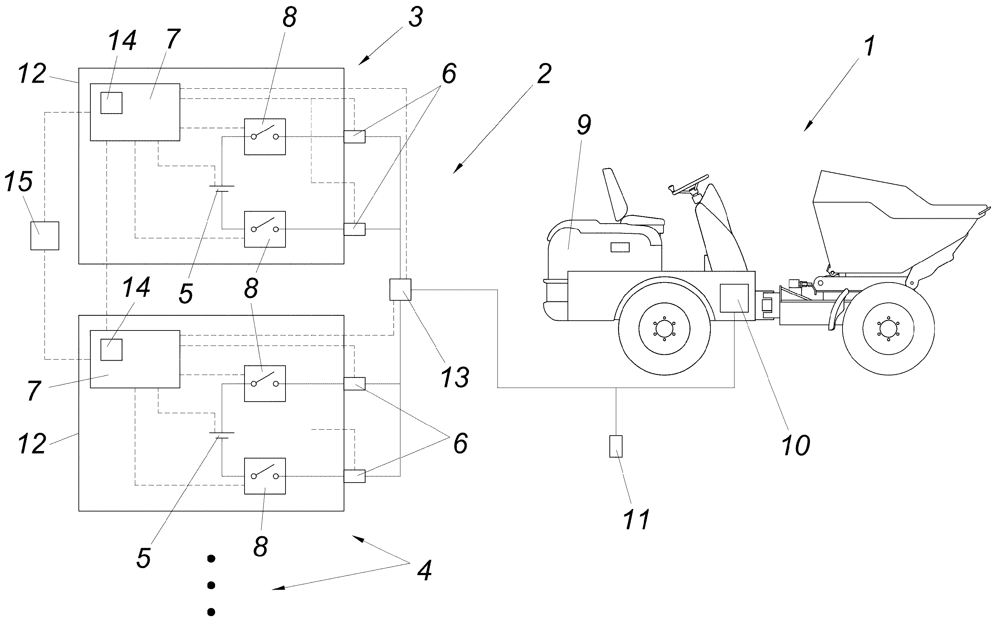

In der Zeichnung ist der Erfindungsgegenstand beispielsweise dargestellt, wobei eine schematische Darstellung der erfindungsgemäßen elektrischen mobilen Arbeitsmaschine gezeigt ist.

Eine erfindungsgemäße elektrische mobile Arbeitsmaschine 1 weist eine Energieversorgungseinheit 2 auf, welche ein Batteriesystem 3 und erfindungsgemäß ein oder mehrere Zusatzbatteriesysteme 4 zur elektrischen Versorgung der Arbeitsmaschine 1 mit elektrischer Energie umfasst. Sowohl das Batteriesystem 3 als auch das Zusatzbatteriesystem 4 weisen jeweils wenigstens einen Energiespeicher 5, wenigstens einen Energiespeicheranschluss 6 und ein Batteriemanagementsystem 7 auf, sodass sowohl das Batteriesystem 3 als auch das Zusatzbatteriesystem 4 für sich autarke, eigensichere Batteriesysteme mit je eigenen Batterieschützen 8 darstellen, die eine Redundanz in der Energieversorgung der Arbeitsmaschine begründen. Die Energieversorgungseinheit 2 kann im Maschinenraum 9 der Arbeitsmaschine 1 eingebaut sein, wobei das Batteriesystem 3 und das Zusatzbatteriesystem 4 unabhängig voneinander ausgebaut werden können. Die Signalleitungen des Batteriemanagementsystems 7 zur Regelung und Überwachung des Batteriesystems 3 respektive des Zusatzbatteriesystems 4 sind beispielhaft strichliert angedeutet. Die Energiespeicheranschlüsse 6 können mit elektrischen Komponenten 10 und/oder mit einem Ladegerät 11 verbunden sein.

Wie in der Zeichnung angedeutet ist, können das Batteriesystem 3 und das bzw. die Zusatzbatteriesysteme 4 bezüglich ihrer Komponenten ident ausgebildet sein.

Zum Schutz und zur verbesserten Handhabe können das Batteriesystem 3 und das Zusatzbatteriesystem 4 je in einem nicht näher dargestellten Gehäuse einer eigenen Einbaueinheit 12 angeordnet sein. Vorzugsweise bilden das Batteriesystem 3 und das Zusatzbatteriesystem 4 idente Einbaueinheiten 12 aus, wodurch auf der Fertigungsseite lediglich eine Art an Batteriesystemen 3,4 entwickelt und gebaut werden muss, welche beliebig miteinander verschaltet werden können. Diese Verbindung kann über eine Verschaltung 13 erfolgen, wodurch die elektrische mobile Arbeitsmaschine 1 entweder von einem Batteriesystem 3 respektive Zusatzbatteriesystem 4 oder von beiden oder mehreren versorgt werden kann.

Wie schematisch angedeutet ist, können das Batteriesystem 3 und das Zusatzbatteriesystem 4 je eine Zuordnungseinheit 14 umfassen. Diese Zuordnungseinheiten 14 ordnen bei Verschaltung mehrerer Batteriesysteme 3 respektive Zusatzbatteriesysteme 4 diesen entweder eine Master- oder Slavefunktion zu, sodass eine strukturierte Hierarchie bei der Regelung und Überwachung der Energieversorgungseinheit 2 über das Batteriemanagementsystem 4 herrscht. Das Batteriemanagementsystem 4 jenes Batteriesystems 3 mit der Masterfunktion ist somit über die Batteriemanagementsysteme 4 jener Batteriesysteme 3 mit der Slavefunktion gestellt.

Durch eine Steuereinheit 15, welche in diesem Fall als separate Funktionseinheit ausgeführt ist, deren Aufgabe in einer alternativen Ausführungsform jedoch von einem Batteriemanagementsystems 7 übernommen werden kann, können das Batteriesystem 3 und das Zusatzbatteriesystem 4 in Abhängigkeit von aus diesen ausgelesenen Funktionsdaten parallel oder seriell geschaltet werden.

## Patentansprüche

1. Elektrische mobile Arbeitsmaschine (1) mit einem Batteriesystem (3) zur elektrischen Versorgung der Arbeitsmaschine (1) mit elektrischer Energie, wobei das Batteriesystem (3) wenigstens einen Energiespeicher (5), wenigstens einen Energiespeicheranschluss (6) und ein Batteriemanagementsystem (7) umfasst, **dadurch gekennzeichnet, dass** neben dem Batteriesystem (3) ein Zusatzbatteriesystem (4) mit wenigstens einem eigenen Energiespeicher (5), wenigstens einem eigenen Energiespeicheranschluss (6) und einem eigenen Batteriemanagementsystem (7) vorgesehen ist.

2. Elektrische mobile Arbeitsmaschine (1) nach Anspruch 1, **dadurch gekennzeichnet, dass** mehrere Zusatzbatteriesysteme (4) vorgesehen sind.

3. Elektrische mobile Arbeitsmaschine (1) nach Anspruch 1 oder 2, **dadurch gekennzeichnet, dass** das Batteriesystem (3) und das Zusatzbatteriesystem (4) bezüglich deren äußeren Abmessungen ident ausgebildet sind.

4. Elektrische mobile Arbeitsmaschine (1) nach einem der Ansprüche 1 bis 3, **dadurch gekennzeichnet, dass** das Batteriesystem (3) und das Zusatzbatteriesystem (4) bezüglich ihrer Komponenten ident ausgebildet sind.

5. Elektrische mobile Arbeitsmaschine (1) nach einem der Ansprüche 1 bis 4, **dadurch gekennzeichnet, dass** das Batteriesystem (3) und das Zusatzbatteriesystem (4) je in einem Gehäuse einer eigenen Einbaueinheit (12) angeordnet sind.

6. Elektrische mobile Arbeitsmaschine (1) nach einem der Ansprüche 1 bis 5, **dadurch gekennzeichnet, dass** das Batteriesystem (3) und das Zusatzbatteriesystem (4) idente Einbaueinheiten (12) ausbilden.

7. Elektrische mobile Arbeitsmaschine (1) nach einem der Ansprüche 1 bis 6, **dadurch gekennzeichnet, dass** das Batteriesystem (3) und das Zusatzbatteriesystem (4) miteinander verschaltbar sind.

8. Elektrische mobile Arbeitsmaschine (1) nach einem der Ansprüche 1 bis 7, **dadurch gekennzeichnet, dass** das Batteriesystem (3) und das Zusatzbatteriesystem (4) je eine Zuordnungseinheit (14) umfassen, über die dem Batteriesystem (3) und dem Zusatzbatteriesystem (4) eine Master- oder Slavefunktion zugeordnet wird.

9. Elektrische mobile Arbeitsmaschine (1) nach einem der Ansprüche 1 bis 8, **dadurch gekennzeichnet, dass** zur Steuerung der elektrischen Versorgung der elektrischen mobilen Arbeitsmaschine (1) eine mit dem Batteriesystem (3) und dem Zusatzbatteriesystem (4) signalverbundene und Funktionsdaten aus diesen auslesende Steuereinheit (15) vorgesehen ist.

10. Energieversorgungseinheit (2) für eine elektrische mobile Arbeitsmaschine (1) mit einem Batteriesystem (3) zur elektrischen Versorgung der Arbeitsmaschine (1) mit elektrischer Energie, wobei das Batteriesystem (3) wenigstens einen Energiespeicher (5), wenigstens einen Energiespeicheranschluss (6) und ein Batteriemanagementsystem (7) umfasst, **dadurch gekennzeichnet, dass** neben dem Batteriesystem (3) ein Zusatzbatteriesystem (4) mit wenigstens einem eigenen Energiespeicher (5), wenigstens einem eigenen Energiespeicheranschluss (6) und einem eigenen Batteriemanagementsystem (7) vorgesehen ist.
